## Europäisches Patentamt
## European Patent Office
## Office européen des brevets

(11) Publication number: **0 061 743**
**B1**

(12) **EUROPEAN PATENT SPECIFICATION**

(45) Date of publication of patent specification: 28.12.88

(51) Int. Cl.⁴: **G 02 F 1/09**

(21) Application number: **82102567.3**

(22) Date of filing: **26.03.82**

(54) Faraday rotator for an optical device.

(30) Priority: 27.03.81 JP 45195/81
28.09.81 JP 153253/81
28.09.81 JP 153254/81
28.09.81 JP 153255/81

(43) Date of publication of application:
06.10.82 Bulletin 82/40

(45) Publication of the grant of the patent:
28.12.88 Bulletin 88/52

(84) Designated Contracting States:
DE FR GB NL

(56) References cited:
US-A-3 764 195
US-A-4 222 668

MATERIALS RESEARCH BULLETIN, vol. 10, no.
2, 1975, pages 95-102, Pergamon Press, Oxford,
GB; J. DAVAL et al.: "Liquid phase epitaxy and
magneto-optical properties of garnet films for
integrated optics"

(73) Proprietor: NEC CORPORATION
33-1, Shiba 5-chome, Minato-ku
Tokyo 108 (JP)

(72) Inventor: Hibiya, Taketoshi
c/o Nippon Electric Co., Ltd. 33-1, Shiba
Gochome
Minato-ku Tokyo (JP)
Inventor: Ohta, Yoshinori
c/o Nippon Electric Co., Ltd. 33-1, Shiba
Gochome
Minato-ku Tokyo (JP)
Inventor: Matsumi, Koichi
c/o Nippon Electric Co., Ltd. 33-1, Shiba
Gochome
Minato-ku Tokyo (JP)

(74) Representative: Glawe, Delfs, Moll & Partner
Patentanwälte
Postfach 26 01 62 Liebherrstrasse 20
D-8000 München 26 (DE)

AIP CONFERENCE PROCEEDINGS, no. 29,
1976, pages 658-659, American Institute of
Physics, New York, US; G. HEPNER et al.:
"Studies of magnetooptical effects in garnets
thin film waveguides"

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

## EP 0 061 743 B1

(56) References cited:

APPLIED OPTICS, vol. 13, no. 10, October 1974, pages 2313-2316, New York, US; S.D. JACOBS et al.: "Faraday rotation optical isolator for 10.6-mum radiation"

JOURNAL OF APPLIED PHYSICS, vol. 52, no. 3, part II, March 1981, pages 2338-2340, American Institute of Physics, New York, US; J.M. ROBERTSON et al.: "Garnet compositions for submicron bubbles with low damping constants"

## Description

The present invention relates to a Faraday rotator for use in such optical devices as an isolator or a switch operating in the visible and infrared regions of electromagnetic waves. Such a Faraday rotator comprises: A non-magnetic garnet substrate (1), a ferrimagnetic garnet film (2) epitaxially grown on the substrate, and a magnet for inducing a magnetic field in said film for rotating the plane of polarization of a light-beam applied to said film within said film, said substrate and said film being made of a material selected so that the absolute value of the difference $\Delta a = a_s - a_f$ between the lattice constant $a_s$ of said substrate and the lattice constant $a_f$ of said film is equal to or smaller than 0.0001 nm.

The document "AIP Conference Proceedings" 29 (1976), pages 658—659" deals with such Faraday rotators and shows two films with $8 \times 10^{-5}$ nm and 0 nm for the value $\Delta a$, which is smaller than the abovementioned 0,0001 nm. For further details of those optical isolators and circulators outlined above, reference is made to a paper entitled "Optical Isolator and Circulator Using $Y_3Fe_5O_{12}$ Crystal for Optical Fiber Transmission" by H. Iwamura et al, published in Summaries of the 3rd International Conference on Ferrites held in Kyoto, Japan on September 29—October 2, 1980 (Reference 2). Also, for details of the above-mentioned optical switch, reference is made to a paper entitled "Bistable Optical Switch Using a Yttrium-Iron-Garnet Crystal with Phase Matching Films", by M. Shirasaki et al, appearing in Applied Physics Letters, Vol. 38, No. 11, pp. 833—834, published on June 1, 1981 (Reference 3). Each Faraday rotator used in the optical devices described in References 2 and 3, however, requires such an expensive bulk yttrium-iron-garnet ($Y_3Fe_5O_{12}$) single crystal, resulting in a costly rotator.

One object of the present invention is, therefore, to provide an inexpensive Faraday rotator capable of exhibiting high isolation and free from the above-mentioned disadvantages of the conventional devices.

For achieving this object the invention provides a Faraday rotator comprising: A non-magnetic garnet substrate (1), a ferrimagnetic garnet film (2) epitaxially grown on the substrate; and a magnet (3) for inducing a magnetic field in said film for rotating the plane of polarization of a light-beam applied to said film within said film, said substrate and said film being made of a material selected so that the absolute value of the difference $\Delta a = a_s - a_f$ between the lattice constant $a_s$ of said substrate and the lattice constant $a_f$ of said f film is equal to or smaller than 0,0001 nm, which is characterized in that said substrate comprises $Gd_3Ga_5O_{12}$ and said film consists of $Gd_xY_{3-x}Fe_5O_{12}$ or $Tb_xY_{3-x}Fe_5O_{12}$, where x ranges from 0,18 to 0,24, or in that said substrate comprises $Dy_xGd_{3-x}Ga_5O_{12}$ and said film consists of $Y_3Fe_5O_{12}$, where x ranges from 0,32 to 0,37.

The present invention will be described in greater detail in conjunction with the accompanying drawings, in which:

Fig. 1 is a partially sectioned perspective view of an embodiment of the present invention;

Fig. 2 is a graph showing the relationship between birefringence and isolation;

Fig. 3 is a graph showing the relation between lattice constant mismatching and the birefringence;

Figs. 4A to 4B and 6A to 6B are diagrams for describing a cutting-out process of a substrate for use in the embodiment;

Fig. 5 is a diagram for describing another cutting-out process; and

Fig. 7 is a diagram for describing an incident light-beam to be applied to a film grown on the substrate.

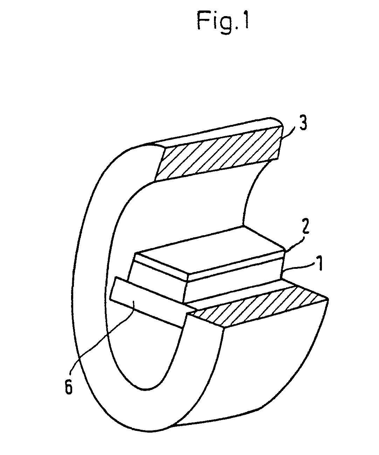

Referring to Fig. 1, a Faraday rotator of the invention comprises a non-magnetic garnet substrate (hereinafter referred to "substrate") 1; a ferrimagnetic garnet film (referred to "film") 2 formed on the substrate; and a permanent magnet 3 for inducing a magnetic field in the film 2 to rotate by 45 degrees within the film 2, a light-beam given to one end surface of the film 2. In a first embodiment of the invention, the film 2 is formed on the substrate 1 by a liquid phase epitaxial (LPE) technique using a flux comprising PbO, $B_2O_3$, $Y_2O_3$, $Gd_2O_3$, and $Fe_2O_3$. A glass plate 6 is used to facilitate placing the substrate 1 inside the magnet 3. The lattice constants $a_s$ and $a_f$ of the substrate 1 and the film 2 were selected so that lattice constant mismatching $\Delta a = a_s - a_f$ satisfies

$$| \Delta a | \leqq 0{,}0001 \text{ nm.}$$

This contributes to preventing isolation deterioration caused by changes in refractive index (birefringence) arising from lattice constant mismatching between the substrate 1 and the film 2. More definitely, tensile strain or compressive strain occurs within the film by the lattice constant mismatching between the substrate 1 and the film 2. The strain consequently causes the difference (birefringence $| \Delta n | = | N_x - N_Y |$) in a refractive index between the in-plane ($N_x$) and the vertical directions ($N_Y$) of the film 2. The birefringence adversely affects the rotation of the plane of polarization of the incident light-beam to deteriorate isolation. To prevent lowered isolation, such mismatching should preferably be zero. However, it may not necessarily be zero if isolation of more than 25 dB suitable for practical purposes is obtained.

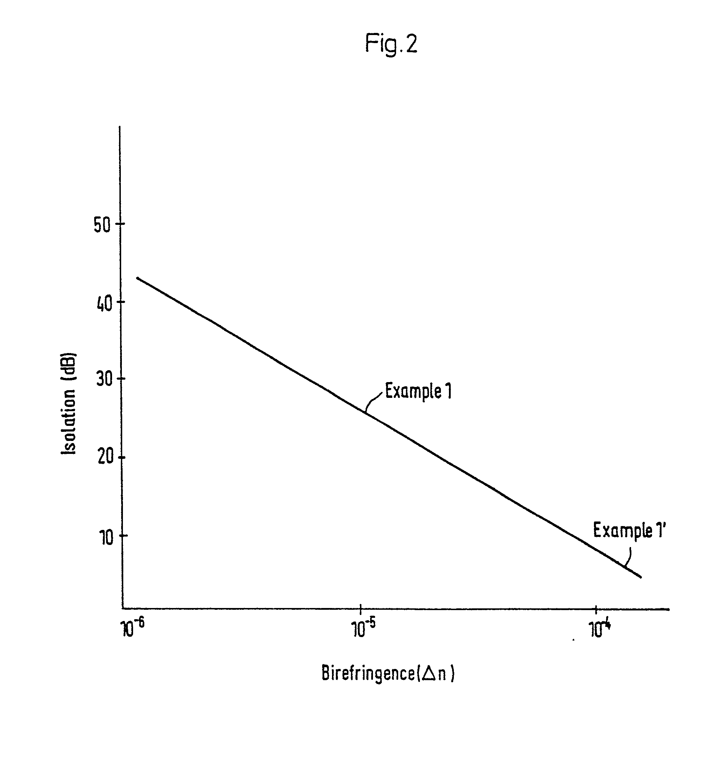

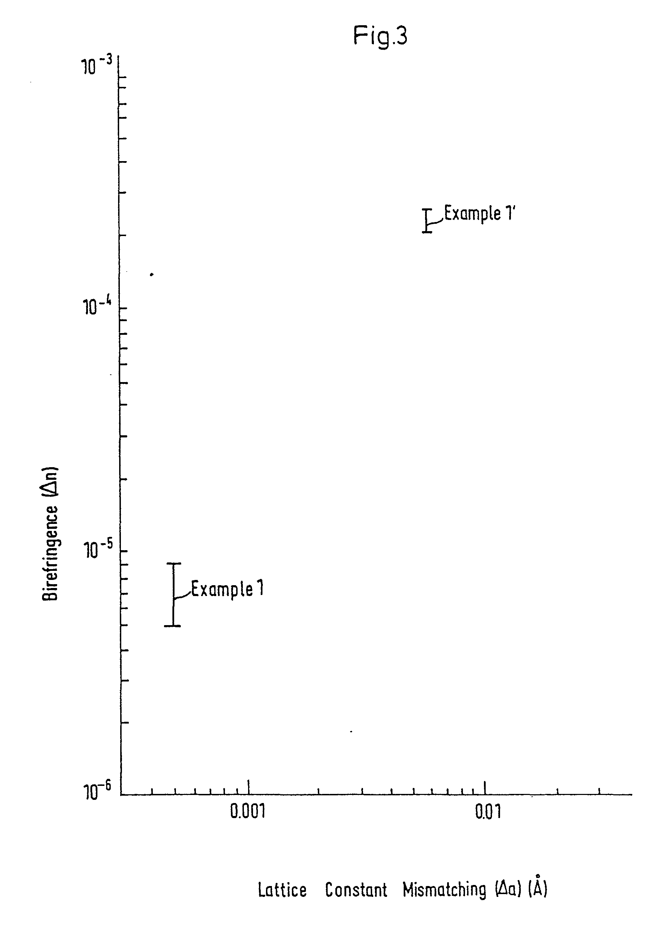

The minimum value of the lattice constant mismatching required for obtaining isolation of 25 dB is described by referring to experimental results shown in Figs. 2 and 3.

From the relationship between the birefringence and isolation shown in Fig. 2, the birefringence $| \Delta n |$ must be below $10^{-5}$ to secure the isolation of more than 25 dB. On the other hand, from Fig. 3 for showing the relation between the above-mentioned mismatching and isolation, it is necessary that the mismatching

# EP 0 061 743 B1

$|\Delta a|$ should be below 0,0001 nm to obtain the birefringence of less than $10^{-5}$. Thus, isolation of more than 25 dB is obtained if the mismatching $|\Delta a|$ between the substrate 1 and the film 2 satisfies

$$|\Delta a| \leqq 0{,}0001 \text{ nm.}$$

Example 1 and Example 1' shown in the following Table 1 exhibit the measurement conditions (such as the dimensions of the substrate 1 and the film 2 formed thereon), the diameter of the light-beam and the intensity of a magnetic field for providing the characteristics described in Figs. 2 and 3 by the use of the structure of Fig. 1.

Examples 1 to 3 shown in Table 1 assume the lattice constant mismatching selected to satisfy $|\Delta a| \leqq 0{,}0001$ nm for the first embodiment.

In the description given below, a symbol {hkl} denotes a crystallographic plane such as a substrate surface cut out from a crystal, whereas a symbol <hkl> denotes a crystallographic axial direction. An equivalent plane and its axis are also indicated by these symbols. On the other hand, symbols (hkl) and [hkl] denote a specific plane and its axis, respectively.

For each of these examples, isolation of more than 25 dB was obtained. In Table 1, (111) and (100) planes were selected as the axis for the film growth, but similar effects were obtained with the films grown in either axis. Example 1' shows data obtained when such a structure that does not satisfy $|\Delta a| \leqq 0{,}0001$ nm was employed for comparison with the present embodiment.

TABLE 1

| Measurement condition | | Example 1 | Example 1' | Example 2 | Example 3 |
|---|---|---|---|---|---|
| Material of substrate | | $Gd_3Ga_5O_{12}$ | $Gd_3Ga_5O_{12}$ | $Dy_{0.35}Gd_{2.65}Ga_5O_{12}$ | $Gd_3Ga_5O_{12}$ |
| Film | Material | $Gd_{0.2}Y_{2.8}Fe_5O_{12}$ | $Y_3Fe_5O_{12}$ | $Y_3Fe_5O_{12}$ | $Gd_{0.2}Y_{2.8}Fe_5O_{12}$ |
| | Direction of growth | (111) | (111) | (111) | (100) |
| | Faraday rotation co-efficient at a wave length 1.3 µm (degree/centimeter) | 188 | 215 | 215 | 188 |
| | Length (millimeters) | 2.4 | 2.1 | 2.1 | 2.4 |
| | Width (millimeters) | 2.0 | 2.0 | 2.0 | 2.0 |
| | Thickness (µm) | 245 | 240 | 240 | 160 |
| | Angle of Faraday rotation (degrees) | 45 | 45 | 45 | 45 |
| Lattice constant mismatching (nm) | | 0.000025 | 0.0006 | −0.00004 | −0.00009 |
| Birefringence of film | | $3 \times 10^{-6}$ | $9 \times 10^{-3}$ | $0.4 \times 10^{-5}$ | $9.5 \times 10^{-6}$ |
| Light-beam | Wave length (µm) | 1.3 | 1.3 | 1.3 | 1.3 |
| | Direction of incidence to film | parallel to film surface | parallel to film surface | parallel to film surface | parallel to film surface |
| Isolation (dB) | | 25 | 7 | 25 | 25 |
| Intensity of a magnetic field (oersteds) | | 200 | 200 | 200 | 200 |

It is to be noted that for the optical switch disclosed in Reference 3, the permanent magnet 3 shown in Fig. 1 must be replaced by an electromagnet for the optical path alteration.

In Examples 1 to 3, the lattice constant mismatching between the substrate 1 and the film 2 lowers the isolation. A surface roughness developed due to constitutional supercooling in the growth process of the film gives the second cause for the isolation deterioration. This roughness appears on a kink plane such as a {111} or {100} plane where the solid-liquid interface is unstable during the film growth process. Since a

distribution coefficient of the garnet solute ions is different from that of impurity ions in the surface roughness, the lattice constants are different microscopically at each of the convex and cave portions of the surface roughness, thereby assumedly lowering the isolation.

Meanwhile, no surface roughness appears on a facet plane such as {110} and {211} planes, each of which has a stable solid-liquid interface during the film growth but a kind of projections called hillocks to make the film thickness uneven. Therefore, the facet plane is not suitable for the film for a Faraday rotator requiring a uniform film thickness.

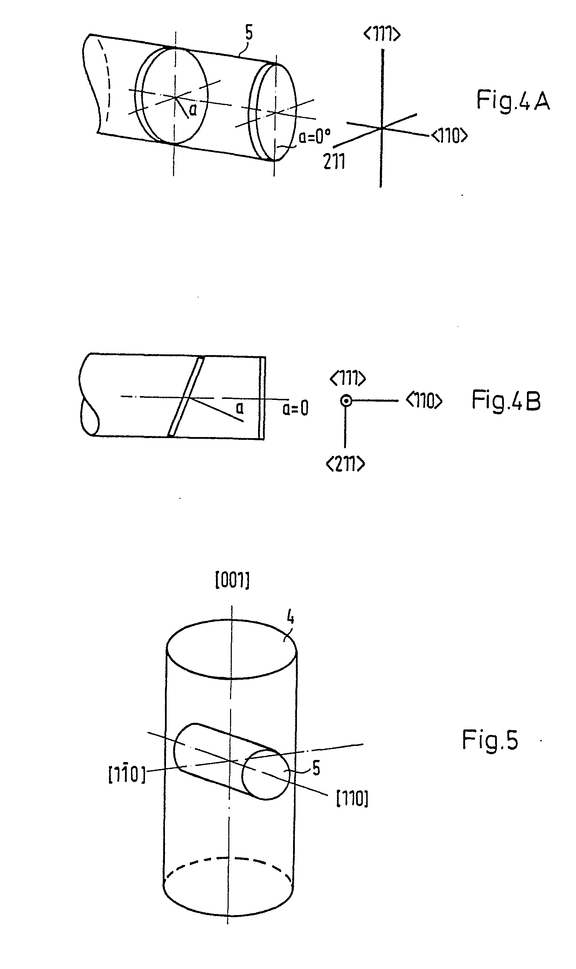

In the second embodiment, a substrate having a surface inclined by $\alpha°$ (degrees) ($0°<\alpha°\leqq15°$) from the {110} or {211} plane was used as the substrate 1 of Fig. 1, as shown in Figs. 4A and 4B to prevent changes in the lattice constant caused by roughness appearing in the film surface. The use of the plane inclined by $\alpha°$ from the {110} and {211} planes free from the above-mentioned constitutional supercooling leads to a film free from the surface roughness on the substrate 1.

The angle $\alpha$ is decided on the fact that what a {110} plane inclines toward a {211} plane by $\alpha$ becomes equal to what the {211} plane incline toward the {110} plane by ($30°-\alpha$).

Examples 4 to 6 of the second embodiment are as follows:

Example 4:

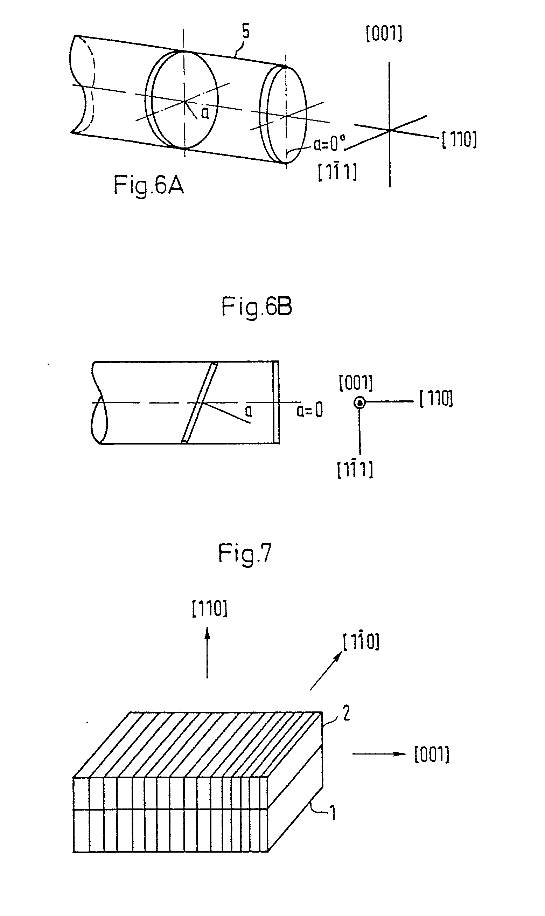

As shown in Fig. 5, a crystal rod 5 parallel to the [110] axis was cut out from a [001]-grown $Gd_3Ga_5O_{12}$ single crystal ingot with a lattice constant of 1,23832 nm. As shown in Figs. 6A and 6B, from the rod 5 was sliced out a substrate 1 with its normal inclined by eight degrees with respect to the [110] axis toward a [1$\bar{1}$1] axis within the (110) plane. A garnet film of $Gd_{0.2}Y_{2.8}Fe_5O_{12}$ having a lattice constant of 1,23840 nm by the LPE method was grown on the substrate 1. The isolator employing this rotator exhibited an isolation of 27 dB.

Example 5:

A crystal rod parallel to the [0$\bar{1}$1] axis was taken from the [111]-grown $Gd_3Ga_5O_{12}$ single crystal ingot having a lattice constant of 1,23832 nm. From the crystal rod was sliced out a substrate with its normal inclined by one degree from the [0$\bar{1}$1] axis toward the [$\bar{2}$11] axis within the (0$\bar{1}$1) plane. A garnet film of $Gd_{0.2}Y_{2.8}Fe_5O_{12}$ having a lattice constant of 1,23838 nm was grown on the substrate 1 by the LPE method. The isolator employing this rotator exhibited an isolation of 27 dB.

Example 6:

A crystal rod parallel to the [$\bar{2}$11] axis was taken from the [111]-grown $Gd_3Ga_5O_{12}$ single crystal ingot having a lattice constant of 1,23828 nm. From the crystal rod was sliced out a substrate with its normal inclined by 15 degrees from the [$\bar{2}$11] axis toward the [0$\bar{1}$1] axis within the ($\bar{2}$11) plane. A garnet film of $Gd_{0.2}Y_{2.8}Fe_5O_{12}$ having the lattice constant of 1,23832 nm was grown on the substrate 1 by the LPE method. The isolator employing this rotator exhibited an isolation of 28 dB.

Table 2 shows the dimensions of the substrate and the film, the material properties and the measurement conditions for Examples 4 to 6.

TABLE 2

| Measurement condition | | Example 4 | Example 5 | Example 6 |
|---|---|---|---|---|
| Material of substrate | | $Gd_3Ga_5O_{12}$ | $Gd_3Ga_5O_{12}$ | $Gd_3Ga_5O_{12}$ |
| Film | Material | $Gd_{0.2}Y_{2.8}Fe_5O_{12}$ | $Gd_{0.2}Y_{2.8}Fe_5O_{12}$ | $Gd_{0.2}Y_{2.8}Fe_5O_{12}$ |
| | Faraday rotation co-efficient at a wave length 1.3 μm (degree/centimeter) | 188 | 188 | 188 |
| | Length (millimeters) | 2.4 | 2.4 | 2.4 |
| | Width (millimeters) | 2.0 | 2.0 | 2.0 |
| | Thickness (μm) | 190 | 130 | 140 |
| | Angle of Faraday rotation (degrees) | 45 | 45 | 45 |
| Lattice constant mismatching (nm) | | 0.00008 | −0.00006 | −0.00004 |
| Birefringence of film | | $9 \times 10^{-6}$ | $6 \times 10^{-6}$ | $5 \times 10^{-6}$ |
| Light-beam | Wave length (μm) | 1.3 | 1.3 | 1.3 |
| | Direction of incidence to film | parallel to film surface | parallel to film surface | parallel to film surface |
| Isolation (dB) | | 27 | 28 | 28 |
| Intensity of a magnetic field (oersteds) | | 200 | 200 | 200 |

The third cause for the isolation deterioration is an inappropriate incidence of the light-beam to the film. Growth striation is produced in a single crystal ingot by melt convection and fluctuation in power supplied to the melt during a crystal pulling-up process. In the vicinity of such growth striation, the segregation of composition takes place to cause a change in lattice constant mismatching in the crystal. The growth striation is further followed by a film to be grown on a substrate cut out from such a crystal. This means that birefringence due to the lattice constant mismatching exists in the film. Therefore, with the light-beam given to the film parallel to the growth striation, the light-beam polarization rotation is affected by the birefringence to cause such isolation deterioration.

In the third embodiment, thus lowered isolation is improved by an incidence of a light-beam perpendicular to growth striation (parallel to the axis of substrate crystal growth).

Examples of the third embodiment are described hereunder.

Example 7:

As shown in Fig. 5, $Gd_3Ga_5O_{12}$ single crystal ingot 4 was grown by the well-known Czochralski method along a [001] axis and a rod 5 having a [110] axis vertical to the [001] axis was cut out from the ingot 4. As shown in Figs. 6A and 6B, a substrate 1 whose normal is inclined by three degrees from the [110] axis toward a [1$\overline{1}$1] axis within the (110) plane was sliced out. The substrate 1 has parallel growth striation as shown in Fig. 7.

A garnet film of $Tb_{0.2}Y_{2.8}Fe_5O_{12}$ taking lattice constant mismatching of 0.00005 nm between the substrate and the film was grown on the substrate 1 (see Fig. 7). When the light-beam was given to the film parallel to the growth axis [001] of the single crystal from which the substrate 1 was sliced out, isolation of 29 dB was obtained.

Example 8:

A rod 5 having the axis [0$\overline{1}$1] which is vertical to a [111] axis was cut out from a non-magnetic $Gd_3Ga_3O_{12}$ single crystal ingot 4 pulled up along the [111] axis by the Czochralski method. From the rod 5 was sliced out the substrate 1 whose surface was inclined by one degree toward the [$\overline{2}$11] axis within the (0$\overline{1}$1) plane. The substrate showed the parallel growth striation on the substrate surface similar to the substrate shown in Fig. 7. On the substrate 1, an LPE $Gd_{0.2}Y_{2.8}Fe_5O_{12}$ garnet film was formed of a 180-μm

6

EP 0 061 743 B1

thickness to have the lattice constant of 0.00004 nm. When the light-beam was given to the film 2 with the axis parallel to the growth axis [111] of the single crystal from which the substrate 1 was sliced out, isolation of 30 dB was obtained.

Examples 7 and 8 of the third embodiment shown in the following Table 3 exhibit the measurement conditions (such as the dimension of the substrate 1 and the film formed thereon), the diameter of the light-beam, and the intensify of a magnetic field.

TABLE 3

| Measurement condition | | Example 7 | Example 8 |
|---|---|---|---|
| Material of substrate | | $Gd_3Ga_5O_{12}$ | $Gd_3Ga_5O_{12}$ |
| Film | Material | $Tb_{0.2}Y_{2.8}Fe_5O_{12}$ | $Gd_{0.2}Y_{2.8}Fe_5O_{12}$ |
| | Faraday rotation co-efficient at a wave length 1.3 μm (degree/centimeter) | 217 | 188 |
| | Length (millimeters) | 2.1 | 2.4 |
| | Width (millimeters) | 2.0 | 2.0 |
| | Thickness (μm) | 140 | 160 |
| | Angle of Faraday rotation (degrees) | 45 | 45 |
| Lattice constant mismatching (nm) | | 0.00005 | 0.00004 |
| Birefringence of film | | $6\times10^{-6}$ | $5\times10^{-6}$ |
| Light-beam | Wave length (μm) | 1.3 | 1.3 |
| | Direction of incidence to film | parallel to film surface | parallel to film surface |
| Isolation (dB) | | 29 | 30 |
| Intensity of a magnetic field (oersteds) | | 200 | 200 |

As shown in Tables 1 to 3, each of Examples 1 to 8 shows data for a structure having a substrate of $Gd_3Ga_5O_{12}$ and a film of either $Gd_{0.2}Y_{2.8}Fe_5O_{12}$ or $Tb_{0.2}Y_{2.8}Fe_5O_{12}$, which satisfies lattice constant mismatching of $|\Delta a| \leqq 0.0001$ nm. In the case of the substrate of $Gd_3Ga_5O_{12}$, the film may be eventually composed of $Gd_xY_{3-x}Fe_5O_{12}$ or $Tb_xY_{3-x}Fe_5O_{12}$, where X ranges from 0.18 to 0.24. On the other hand, in Example 2 where the substrate of $Y_3Fe_5O_{12}$ and the film of $Dy_{0.35}Gd_{2.65}Ga_5O_{12}$ was used as the material satisfying the lattice constant mismatching of $|\Delta a| \leqq 0.0001$ nm the film may be composed of $Dy_xGd_{3-x}Ga_5O_{12}$, where X ranges from 0.32 to 0.37.

As discussed hereinabove, the present invention can achieve a less expensive Faraday rotator for a higher degree of isolation.

**Claims**

1. A Faraday rotator comprising: a non-magnetic garnet substrate (1); a ferrimagnetic garnet film (2) epitaxially grown on the substrate; and a magnet (3) for inducing a magnetic field in said film for rotating the plane of polarization of a light-beam applied to said film within said film, said substrate and said film being made of a material selected so that the absolute value of the difference $\Delta a = a_s - a_f$ between the lattice constant $a_s$ of said substrate and the lattice constant $a_f$ of said film is equal to or smaller than 0,0001 nm, characterized in that said substrate comprises $Gd_3Ga_5O_{12}$ and said film consists of $Gd_xY_{3-x}Fe_5O_{12}$ or $Tb_xY_{3-x}Fe_5O_{12}$, where x ranges from 0,18 to 0,24, or in that said substrate comprises $Dy_xGd_{3-x}Ga_5O_{12}$ and said film consists of $Y_3Fe_5O_{12}$, where x ranges from 0,32 to 0,37.

2. A Faraday rotator as claimed in claim 1 wherein said substrate (1) is sliced out from a single crystal ingot having a predetermined growth axis in such a way that said substrate has its normal inclined from a <110> axis toward a predetermined axis by an angle of α° greater than 0 degree but equal to or smaller than 15 degrees.

7

## EP 0 061 743 B1

3. A Faraday rotator as claimed in claim 1 wherein said substrate is sliced out from a single crystal ingot having a predetermined growth axis in such a way that said substrate has its normal inclined from a <211> axis toward a predetermined axis by an angle of $\alpha°$ greater than 0 degree but equal to or smaller than 15 degrees.

4. A Faraday rotator as claimed in claim 1 wherein said substrate has growth striation, and the light-beam is given to said film vertically to said growth striation from one end surface of said film.

5. A Faraday rotator as claimed in claim 1 wherein said substrate is sliced out from a non-magnetic garnet single crystal having a <111> growth axis, said substrate having its normal inclined from a <110> axis toward a <211> axis within a {110} plane by an angle of $\alpha°$ greater than 0 degree but equal to or smaller than 15 degrees.

### Patentansprüche

1. Faraday-Dreher mit einem nichtmagnetische Granatträger (1); einem epitaxisch auf dem Träger gewaschsenen ferrimagnetischen Granatfilm (2); und einem Magneten (3) zum Induzieren eines magnetischen Feldes in dem Film, um die Polarisationsebene eines auf den Film gewandten Lichtstrahls innerhalb des Filmes zu drehen, wobei der Träger und der Film aus einem Material hergestellt werden, das so ausgewählt ist, daß der absolute Wert der Differenz $\Delta a = a_s - a_f$ zwischen der Gitterkonstanten $a_s$ des Trägers und der Gitterkonstanten $a_f$ des Films gleich oder kleiner als 0,0001 Nanometer ist, dadurch gekennzeichnet, daß der Träger $Gd_3Ga_5O_{12}$ aufweist und der Film aus $Gd_xY_{3-x}Fe_5O_{12}$ oder $Tb_xY_{3-x}Fe_5O_{12}$ besteht, wobei x zwischen 0,18 und 0,24 liegt, oder daß der Träger $Dy_xGd_{3-x}Ga_5O_{12}$ aufweist und der Film aus $Y_3Fe_5O_{12}$ besteht, wobei x zwischen 0,32 und 0,37 liegt.

2. Faraday-Dreher nach Anspruch 1, dadurch gekennzeichnet, daß der Träger (1) aus einem monokristallinen Block, der eine vorherbestimmte Wachsetumsachse hat, derart herausgeschnitten wird, daß der Träger seine Normale von einer <110> Achse gegen eine vorherbestimmte Achse um einen Winkel von $\alpha$ größer als 0° aber gleich oder kleiner als 15° geneigt hat.

3. Faraday-Dreher nach Anspruch 1, dadurch gekennzeichnet, daß der Träger von einem monokristallinen Block, der eine vorherbestimmte Wachstumsachse hat, derart herausgeschnitten wird, daß der Träger seine Normale, von der <211> Achse gegen eine vorherbestimmte Achse um einen Winkel von $\alpha$ größer als 0° aber gleich oder kleiner als 15° geneigt hat.

4. Faraday-Dreher nach Anspruch 1, dadurch gekennzeichnet, daß der Träger eine Wachstumsschichtung hat und der Lichtstrahl, senkrecht zu der Wachstumsschichtung, von einer Seitenfläche des Films auf den Film gegeben wird.

5. Faraday-Dreher nach Anspruch 1, dadurch gekennzeichnet, daß der Träger aus einem nichtmagnetischen monokristallinen Granat mit einer <111> Wachstumsachse herausgeschnitten wird, wobei der Träger seine Normale von einer <110> Achse gegen eine <211> Achse innerhalb einer {110} Ebene um einen Winkel $\alpha$ größer als 0° aber gleich oder kleiner als 15° geneigt hat.

### Revendications

1. Rotateur de Faraday comprenant: un substrat en grenat amagnétique (1); une pellicule de grenat ferrimagnétique (2) ayant subi une croissance épitaxiale sur le substrat; et un aimant (3) pour induire un champ magnétique dans la pellicule afin de faire tourner le plan de polarisation d'un faisceau lumineux appliqué à la pellicule à l'intérieur de celle-ci, le substrat et la pellicule étant constitués d'un matériau sélectionné de manière que la valeur absolue de la différence $\Delta a = a_s - a_f$ entre la constante $a_s$ du réseau du substrat et la constante $a_f$ du réseau de la pellicule soit égale ou inférieure à 0,0001 nm, caractérisé en ce que le substrat comprend $Gd_3Ga_5O_{12}$ et la pellicule est constituée de $Gd_xY_{3-x}Fe_5O_{12}$ ou de $Tb_xY_{3-x}Fe_5O_{12}$, où x est compris entre 0,18 et 0,24, ou en ce que le substrat comprend $Dy_xGd_{3-x}Ga_5O_{12}$ et la pellicule est constituée de $Y_3Fe_5O_{12}$, où x est compris entre 0,32 et 0,37.

2. Rotateur de Faraday selon la revendication 1, dans lequel le substrat (1) est tranché dans un lingot monocristallin ayant un axe de croissance prédéterminé de façon que le substrat ait sa normale inclinée par rapport à un axe <110> vers un axe prédéterminé suivant un angle de $\alpha°$ supérieur à 0° mais égal ou inférieur à 15°.

3. Rotateur de Faraday selon la revendication 1, dans lequel le substrat est tranché dans un lingot monocristallin ayant un axe de croissance prédéterminé de façon que le substrat ait sa normale inclinée par rapport à un axe <211> vers un axe prédéterminé suivant un angle de $\alpha°$ supérieur à 0° mais égal ou inférieur à 15°.

4. Rotateur de Faraday selon la revendication 1, dans lequel le substrat a une striation par croissance, et le faisceau lumineux est donné à la pellicule verticalement par rapport à la striation à partir d'une surface d'extrémité de la pellicule.

5. Rotateur de Faraday selon la revendication 1, dans lequel le substrat est taillé dans un monocristal de grenat amagnétique ayant un axe de croissance <111>, le substrat ayant sa normale inclinée par rapport à un axe <110> vers un axe <211> à l'intérieur d'un plan {110} suivant un angle de $\alpha°$ supérieur à 0° mais égal ou inférieur à 15°.

8

Fig.1

**EP 0 061 743 B1**

Fig.2

Isolation (dB) vs Birefringence($\Delta n$)

Example 1

Example 1'

2

# Fig.3

Birefringence (Δn) vs Lattice Constant Mismatching (Δa) (Å)

Fig.4A

Fig.4B

Fig.5

Fig.6A

[001]

[110]

[1̄1̄1]

α=0°

5

α

Fig.6B

[001]

[110]

[1̄1̄1]

α

α=0

Fig.7

[110]

[11̄0]

[001]

2

1

5